# EUROPEAN PATENT APPLICATION

(11) **EP 1 257 083 A2**
(43) Date of publication of application: **13.11.2002**
(21) Application number: 01121001.0
(22) Date of filing: 31.08.2001
(51) Int. Cl.: H04L 9/32

(54) **A digital signature verification apparatus**

(30) Priority: 08.05.2001 JP 2001136827
(71) Applicant: Hitachi, Ltd., Chiyoda-ku, Tokyo 101-8010 (JP)
(72) Inventor: Tomita, Taminori, Hitachi, Ltd., Int. Prop. Group, Chiyoda-ku, Tokyo 100-8220 (JP); Miyazaki, Yutaka, Hitachi, Ltd., Int. Prop. Group, Chiyoda-ku, Tokyo 100-8220 (JP)
(74) Representative: Strehl Schübel-Hopf & Partner

(57) **Abstract**

A digital signature apparatus of the present invention includes a digital signature analyzing means (210) for receiving information which identifies at least a signature object data (101), and a file including a digital signature which contains signatory identifying information (203), analyzing the relationship between said digital signature and the signature object data of said digital signature, verifying the signature and outputting a result of the signature analysis, and a digital signature display image generating means for generating a digital signature display image including the content of said signature object data together with the result of said signature analysis (211). The content of the signature object data and the information on the digital signature are displayed on one and the same screen (205).

## Description

### BACKGROUND OF THE INVENTION

The present invention relates to a technology for verifying digital signatures and in particular to a technology which is capable of displaying data upon which at least one digital signature is put.

As to documents such as contracts which are made among entities such as government offices and privately-owned corporations, exchanging of electronic documents which are prepared by using information processing devices such as computers has been increased in lieu of exchanging paper documents. On exchanging of electronic documents, electronic signatures (digital signatures) have been used for authentication of person identification or protection against tampering by unauthorized persons. The technology of the digital signature per se is described in, for example, "Digital signature and encryption technology", par. 4.3 "digital signature", Piason Education (1997).

Various digital signature such as multiple-signature in which a digital signature is further put on digitally signed data, and partial signature is which digital signature is put on only a specified portion of the data have been proposed. It is possible to put a plurality of digital signatures by utilizing these schemes.

A method of representing the fact that data is digitally signed includes an Authenticode technique which is described in, for example, "Web security and commerce" par. 9.2 "Authenticode technique of Microsoft" to par. 9.4 "other code signature method", 1998, O'Reilly Japan, Co. Ltd. This technology is adapted to display a certificate when it detects a signature. A technology to represent the state of multiple-signature includes a multiple-signature apparatus as is disclosed in JP-A-2000-293102 entitled "Digital multiple-signature apparatus and recording medium".

The correspondence relationship between digital signature and data to be digitally signed has not heretofore been considered.

### SUMMARY OF THE INVENTION

Since the correspondence relationship has not been considered as mentioned above, in the prior art, only the file name is displayed as information on the data signed, when the fact that the data is digitally signed is displayed. Accordingly, there is a problem that the content of the data signed digitally can not be readily confirmed.

And, XML (Extensible Markup Language) documents, which have recently attracted attention, is possible to put a partial signature which specifies a part of file as a signature object. However, it is difficult for the above-mentioned prior art which assumes to put digital signature on the whole of the file, to immediately confirm the partial signature and the content of the signature object data.

It is an object of the present invention to readily confirm the digital signature and the content of its signature object data (file).

In order to accomplish the above-mentioned object, the present invention has features as follows:

The data which is an object of the digital signature is related with the information representative of the range of the object of the digital signature involved. The data which is an object of the digital signature may be a partial data in a predetermined unit. An example of the predetermined unit may be one file.

The present invention also has features as follows: A digital signature object data identifier is annexed to a digital signature file as an information which represents the range of the digital signature object. The range of the digital signature object (partial data) is detected based upon the digital signature object data identifier which is attached to the entered digital signature file. Detecting the range of the digital signature object includes detecting what data is included in the digital signature file by analyzing the digital signature file.

The present invention further includes correlation of the content of the range of the digital signature object with the data related with the digital signature and displaying it. The data which is related with the digital signature includes information on an apparatus or user that has put the digital signature. Displaying with correlation includes displaying on the same display.

### BRIEF DESCRIPTION OF THE DRAWINGS

Fig. 1 is a view showing a digital signature data dsign.xml which is displayed by the digital signature display system of one embodiment of the present invention;
Fig. 2 is a schematic diagram showing the digital signature display system of the embodiment of the present invention;
Fig. 3 is a flow chart showing the processing procedure of the digital signature analyzing and processing unit 210 of the present embodiment of the present invention;
Fig. 4 is a flow chart showing a process of the digital signature display image generating and processing unit 211 of the embodiment of the present invention;
Fig. 5 is a diagram showing the digital signature data dsign.xml;
Fig. 6 is a diagram showing an example of the digital signature information which is obtained by processing the digital signature data dsign.xml in the digital signature analyzing and processing unit 210;
Fig. 7 is a view showing an example of the display of the digital signature data dsign.xml;
Fig. 8 is a view showing an example of the display of the digital signature data dsign.xml, which is added with a frame representing the data which is represented by an identifier ALL;
Fig. 9 is a diagram showing the digital signature data dsign2.xml;
Fig. 10 is a diagram showing an example of the digital signature information which is obtained by processing the digital signature data dsign2.xml in the digital signature analyzing and processing unit 210;
Fig. 11 is a view showing the digital signature data dsign2.xml which is displayed by the digital signature display system of the embodiment of the present invention;
Fig. 12 is a diagram showing the digital signature data dsign3.xml;
Fig. 13 is a diagram showing an example of the digital signature information which is obtained by processing the digital signature data dsign3.xml in the digital signature analyzing and processing unit 210; and
Fig. 14 is a view showing the digital signature data dsign3.xml which is displayed by the digital signature display system of the embodiment of the present invention.

### DESCRIPTION OF THE EMBODIMENTS

Now, a digital signature display apparatus of an embodiment for displaying the digital signature will be described.

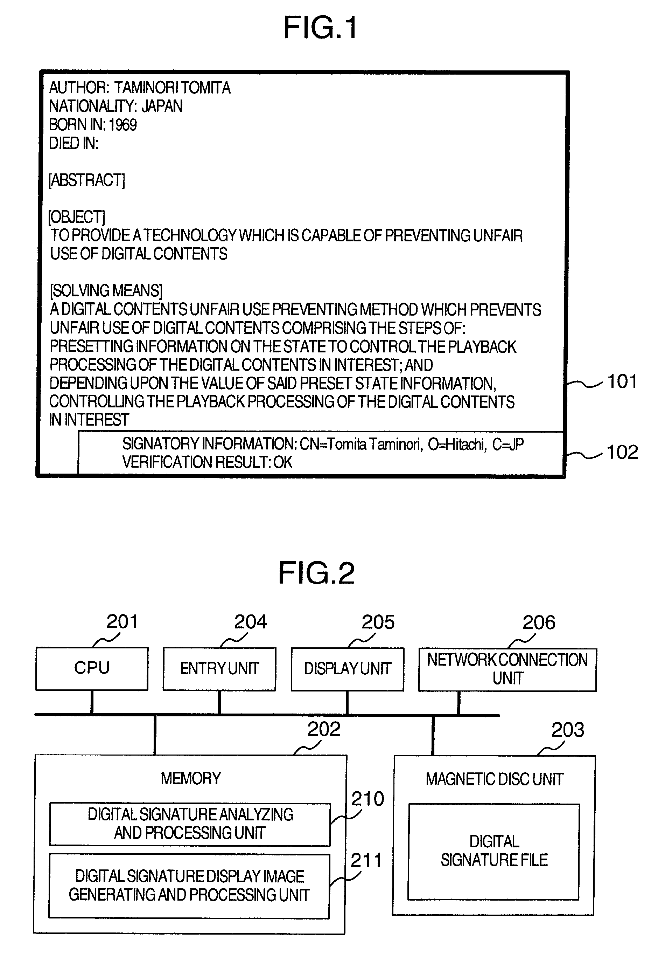

Fig. 2 is a diagram showing the schematic structure of the digital signature display apparatus of the present embodiment. As shown in Fig. 2, the digital signature display apparatus of the present embodiment comprises a CPU 201, memory 202, magnetic disc unit 203, entry unit 204, display unit 205 and a network connection unit 206.

The CPU 201 controls an operation and a processing of the whole of the digital signature display apparatus. The memory 202 is a storage for loading therein various processing programs and data to control the operation of the whole of the digital signature display apparatus.

The magnetic disc unit 203 is a storage to store the above-mentioned various processing programs and data. The entry unit 204 inputs operator guidance and the like to the digital signature display apparatus. The display unit 205 displays states of the operation of the digital signature display unit and the states of digital signature. The network connection unit 206 connects the digital signature display apparatus to the network to receive and transmit data from and to the other devices which are connected to the network.

The digital signature display apparatus further comprises a digital signature analyzing and processing unit 210 and a digital signature display image generating and processing unit 211.

The digital signature analyzing and processing unit 210 is a processing unit for inputting a digital signature file designated by the entry unit 204, verifying the data signed digitally and the validity of the digital signature, analyzing informations of a digital signatory and outputting a result of the analysis.

The digital signature display image generating and processing unit 211 is a processing unit for inputting the analysis result output from the digital signature analyzing and processing unit 210, generating a digital signature display image and displaying the image on the display unit 205.

It is supposed that the program which causes the digital signature display system to operate as the digital signature analyzing and processing unit 210 and the digital signature display image generating and processing unit 211 is loaded on the memory and executed, after recorded on a recording medium such as CD-ROM and the like. The recording medium for recording the program may be any recording media other than CD-ROM. Alternatively, the program may be distributed over the network.

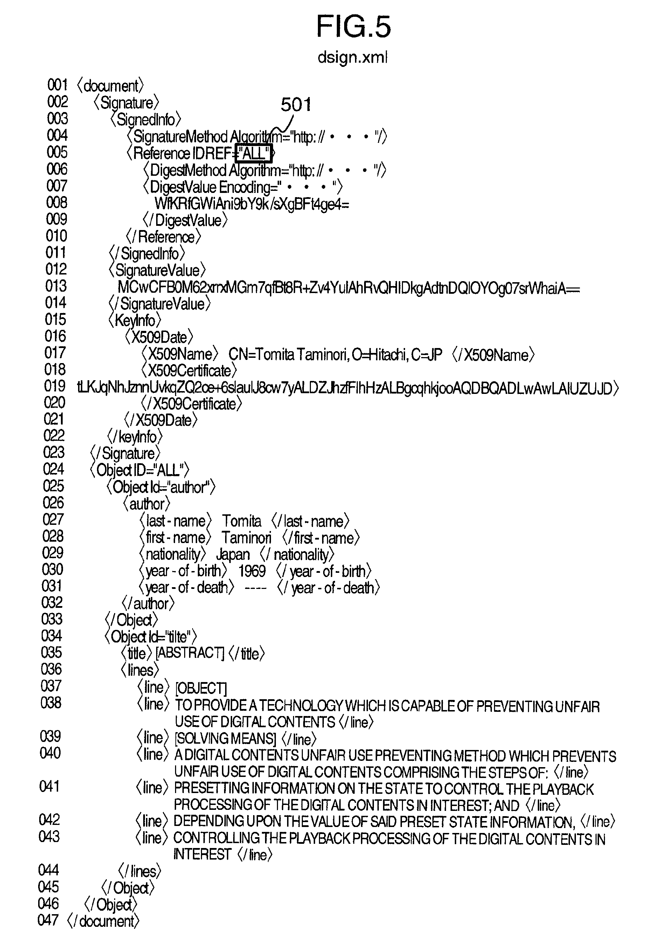

The digital signature may be conducted according to a specification, for example, XML-signature which are being defined by W3C, a standard organization. An example of dsign. xml of the digital signature file which conforms with XML is illustrated in Fig. 5. The present digital signature file represents digital signature information between tag <signature> in line 002 to </signature> in line 023. A signature object data identifier 501 "ALL" designated in the tag <Reference> in line 005 is an identification which identifies the signature object data. The data represented by said identifier 501 "ALL" is enclosed by the tags <Object id="All" in line 024 to </Object> in line 046 in the present digital signature file.

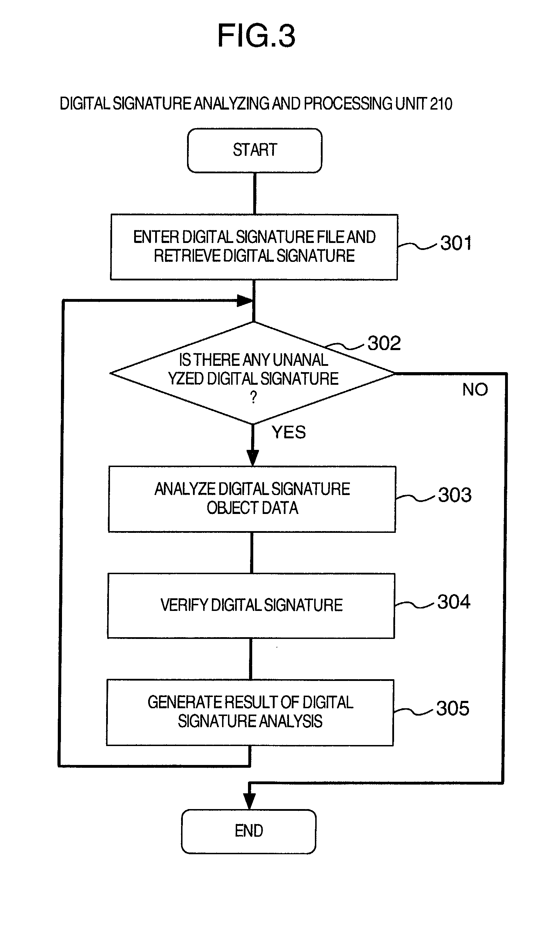

Fig. 3 is a flow chart showing the process of the digital signature analyzing and processing unit 210 of the digital signature display apparatus of the present embodiment. As shown in Fig. 3, the digital signature analyzing and processing unit 210 receives the digital signature file name entered from the entry unit 204 and analyzes the digital signature.

Now, the processing will be described by way of the case in which the digital signature file dsign.xml shown in Fig. 5 is designated.

At step 301, the designated digital signature file dsign.xml shown in Fig. 5 is read from the magnetic disc unit 203, and the digital signature is retrieved from the file. In the present embodiment, the presence of the digital signature is recognized by retrieving the data enclosed between the tags <Signature> and </Signature>.

At step 302, if there is no digital signature in the designated digital signature file, or only digital signatures already analyzed therein, then the processing is terminated. If a digital signature not analyzed is detected, the program sequence proceeds to step 303.

At step 303, the detected digital signature is analyzed to retrieve the digital signature object data. In the digital signature file in Fig. 5, the data represented by the digital signature object data identifier "All" in the tag <Reference IDREF="ALL"> in line 004 is retrieved. As a result of the retrieval, it is recognized that the data from <Object ID="ALL> in line 023 to </Object> in line 047 in the digital signature file is the signature object data. The term "identifier" used herein is data which identifies the particular data. The data identified by the identifier may be external of the digital signature file. In this case, the digital signature object data identifier is represented in, for example, URI form.

The file which includes the digital signature object data is hereinafter referred to as "digital signature data file".

At step 304, verification of the digital signature is performed to determined whether or not the digital signature is true, and an information on the signatory is obtained. In the digital signature file dsign.xml in Fig. 5, the information on the signatory is described in a portion "CN=Tomita Taminori, O=Hitachi, C=JP" between the tags <X509Name> and </X509Name> in line 017.

At step 305, the field of the digital signature object data established at step 303, the digital signature object data file name, the signatory obtained at step 304 and the result of the signature verification are output as a digital signature analysis result.

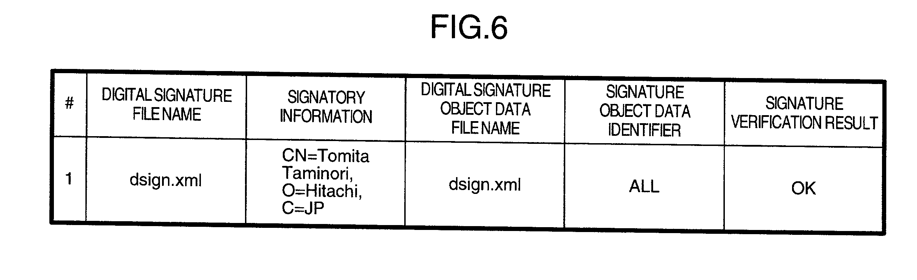

An example of the digital signature analysis result is shown in Fig. 6. The result comprises the digital signature file name, signatory information, digital signature object data file name, signature object data identifier and the signature verification result.

After outputting the digital signature analysis result, the program sequence returns to step 302 again. If there is unanalyzed digital signature, steps 303 to 304 are repeated. When the analysis of the digital signature existing in the digital signature file is completed, then processing is terminated. The processing may be terminated subject to a completion of analysis of all target digital signatures.

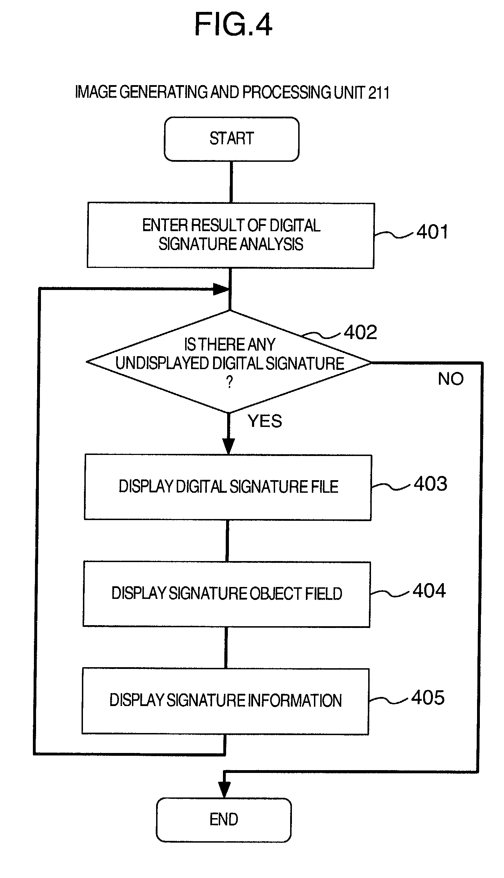

After termination of the processing of the digital signature analyzing and processing unit 210, processing in the digital signature display image generating and processing unit 211 is initiated. As shown in Fig. 4, the digital signature display image generating and processing unit 211 inputs the digital signature analysis result from the digital signature analyzing and processing unit 210 and generates an image representing the digital signature object.

At step 401, the digital signature analysis result from the digital signature analyzing and processing unit is input.

At step 402, if undisplayed digital signature analysis result is not in the digital signature analysis result, the processing is terminated. When an undisplayed digital signature exists, the program sequence will proceed to step 403.

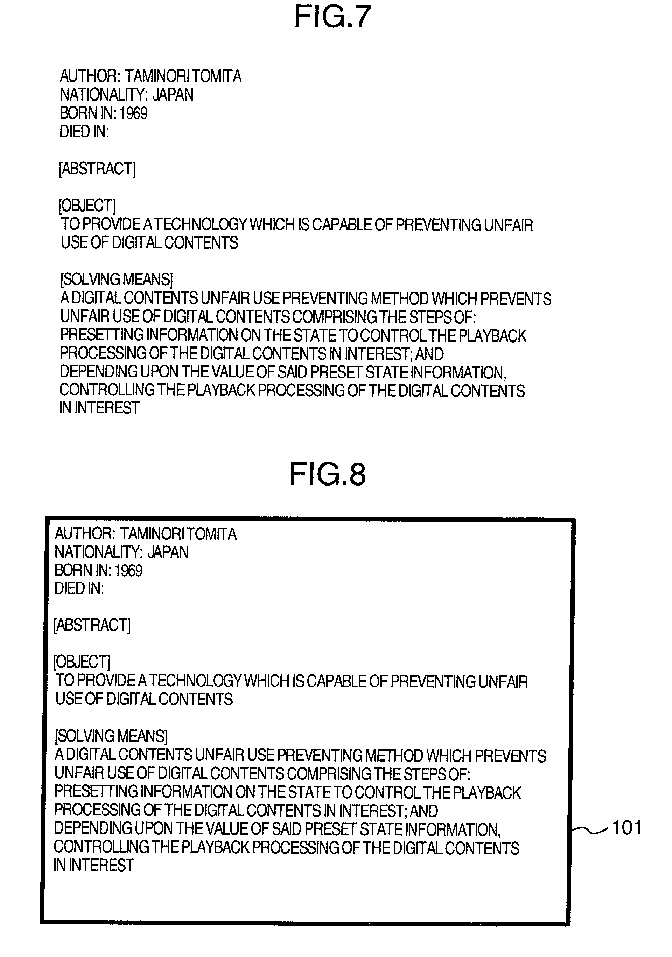

At step 403, the digital signature object data file shown in the undisplayed digital signature analysis result is displayed. When the digital signature object data file is already displayed, the processing is omitted. An example of the display of the digital signature object data file dsign.xml in case of Fig. 6 is shown in Fig. 7.

At step 404, a frame, which represents the field of the digital signature object data among the digital signature object data file displayed at step 403, is generated. A display example in case of Fig. 6 is shown in Fig. 8. A reference numeral 101 denotes the frame which represents the field of the digital signature object data.

At step 405, a result of the digital signature analysis, which is represented by the frame indicating the field of the digital signature object data displayed at step 404, is displayed. An example of the display in case of Fig. 6 is shown in Fig. 1. Reference numerals 101 and 102 denote the frame representing the field of the digital signature object data and the digital signature analysis result represented by the frame 101, respectively.

The signature analysis result may be displayed by colors or symbols other than character array as shown in Fig. 1.

Alternatively, the signature verification result may be represented by, for example, the color of the display frame 101.

After completion of step 405, the program sequence will returns to step 402 again. If undisplayed digital signature analysis result exists, then steps 403 to 405 are repeated. When generation of the image of the digital signature analysis result is completed, the processing is terminated. The processing may be terminated subject to a completion of the generation of all of the images of the digital signature analysis results.

As described above, in the digital signature display apparatus of the present embodiment, it is possible to confirm what contents are digitally signed by whom without requiring a number of operations to display the information on the signatory and the data content of the signature object on a screen.

Although the digital signature analyzing and processing unit 210 and the digital signature display image generating and processing unit 211 are implemented in all-in-one device in present embodiment, they may be implemented by discrete devices.

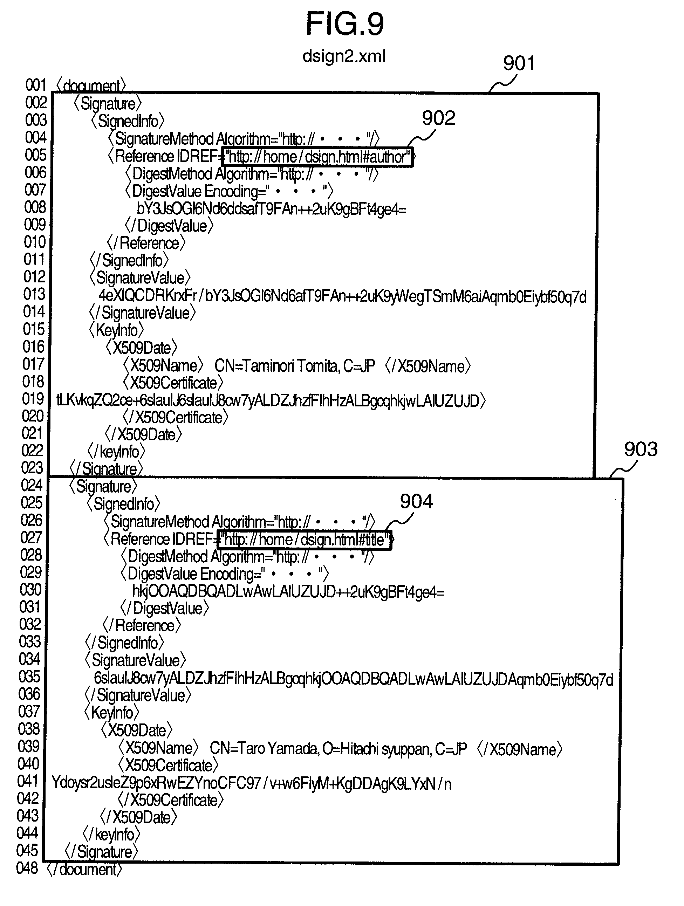

Fig. 9 shows an example of second digital signature file dsign 2. xml which is described in XML.

The second digital signature file comprises a first digital signature 901 of tag <Signature> in line 002 to tag </signature> in line 023 and a second digital signature 903 in lines 024 to 045.

A tag signature object data identifier 902 in Fig. 9 identifies the signature object data of the first digital signature 901. The identifier 902 is designated in the tag <Reference>. The data represented by the identifier 902 is enclosed between the tags <Object Id="author"> in line 033 in the file dsign.xml in Fig. 5. A specific example of the identifier 902 may be "http://home/dsign.htm#author".

Similarly, the signature object identifier 904 in Fig. 9 is an identifier for identifying the signature object data of the second digital signature 903. The data represented by the signature object identifier 904 is the location enclosed between a tag <Object Id="title"> in the line 034 and the tag /Object> in the line 045 in the file dsign.xml in Fig. 5. A detailed example of the signature object identifier 904 may be "http://home/dsign.html#title".

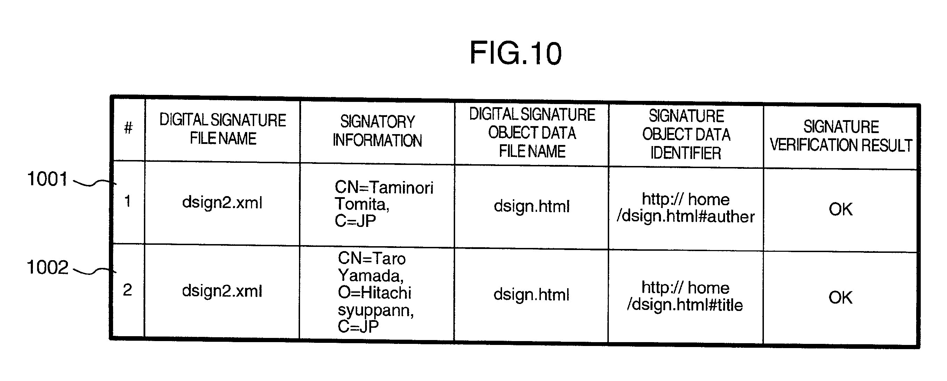

A result which is obtained by processing such a second digital signature file in said digital signature analyzing and processing unit 210 is shown in Fig. 10.

Fig. 10 shows a result of the digital signature analyzing of the second digital signature file. Reference numeral 1001 in the drawing denotes a result of digital signature analysis of the first digital signatures 901, and reference numeral 1002 in the drawing denotes a result of digital signature analysis of the second digital signatures 903.

Subsequently, a digital signature display image is generated by processing the result of the digital signature analysis shown in Fig. 10 in the digital signature display image generating and processing unit 211.

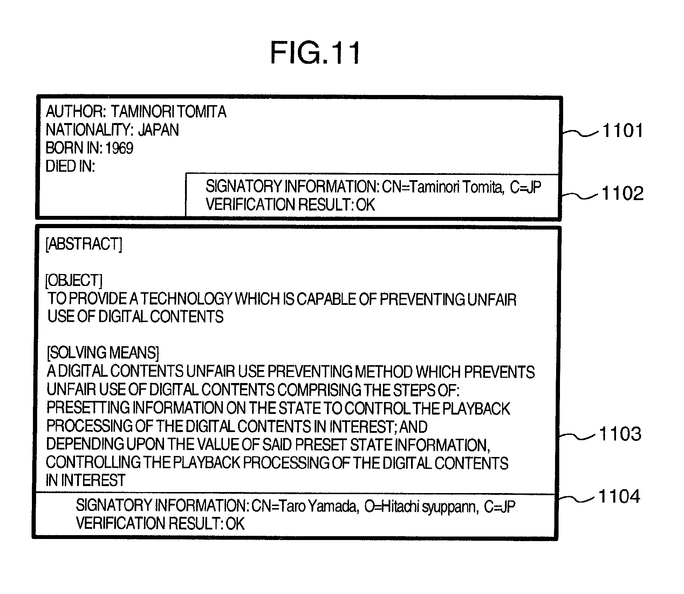

An example of the displayed image of the second digital signature file is shown in Fig. 11. A display frame 1101 denotes the range of the signature object of the first digital signature 901. Signature information 1102 is the information relating to the signature analyzing result of the first digital signature 901. Similarly, a display frame 1103 denotes the range of the signature object of the second digital signature 903 and signature information 1104 is information relating to the signature analyzing result of the second digital signature 903.

As described above, in the digital signature display apparatus of the present embodiment, it is possible to confirm what content is digitally signed by whom without requiring a number of operations to display the content of the digital signature object file, the field of the digital signature object and the information on the digital signatory on one screen even if the data of the digital signature object is part of the file. It is also possible to do so if one signature object file is signed by a plurality of signatories.

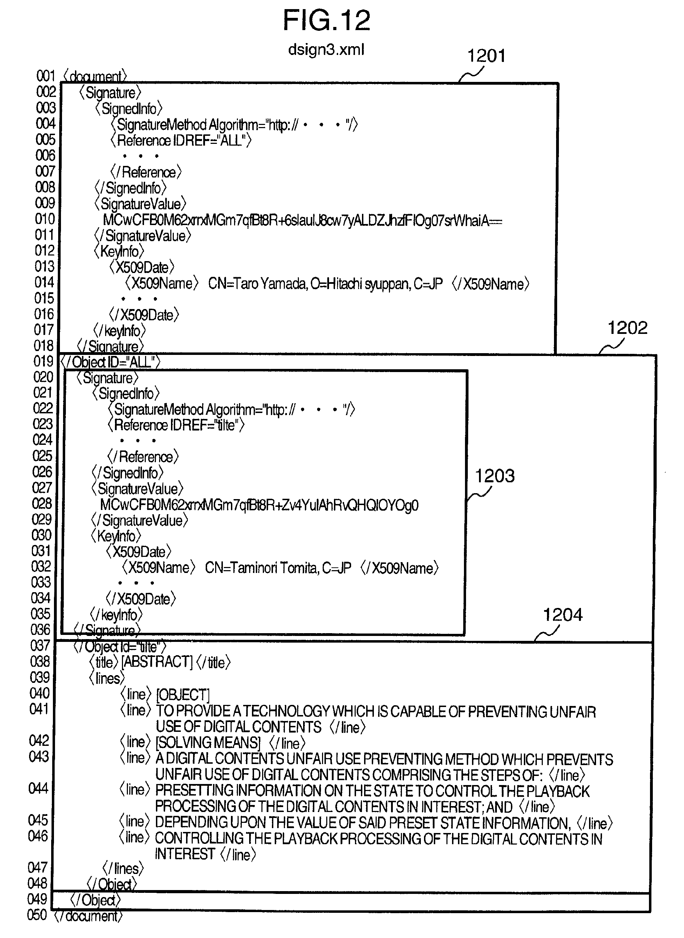

Fig. 12 shows an example of a third digital signature file dsign3.xml which is described in XML.

The third digital signature file comprises the first digital signature 1201 in lines 002 to 018 and the second digital signature 1203 in lines 020 to 036.

The signature object data of the first digital signature 1201 is a field 1202 represented by an identifier "ALL" in lines 019 to 049. Similarly, the data which is the object of verification of the second digital signature 1203 is a field 1204 represented by an identifier "title" in lines 037 to 048.

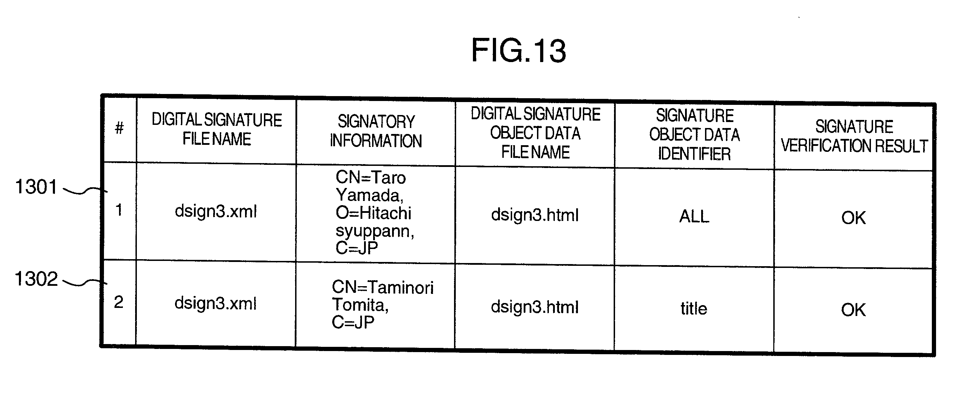

A result obtained by processing the third digital signature file in the digital signature analyzing and processing unit 210 is shown in Fig. 13.

Fig. 13 shows the result of the digital signature analysis of the third digital signature file. Reference numeral 1301 in the drawing denotes a result of digital signature analysis of the first digital signatures 1201, and reference numeral 1302 in the drawing denotes a result of digital signature analysis of the second digital signatures 1203.

Subsequently, a digital signature display image is generated by processing the result of the digital signature analysis shown in Fig. 13 in the digital signature display image generating and processing unit 211.

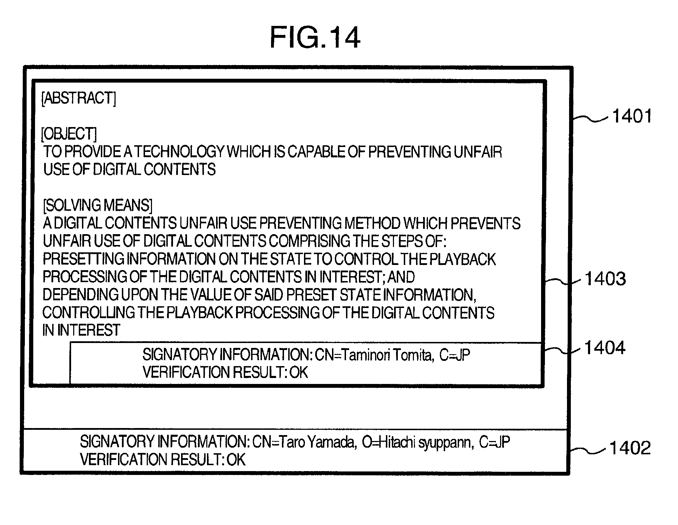

An example of the displayed image of the third digital signature file is shown in Fig. 14. A display frame 1401 denotes the range of the signature object of the first digital signature 1201. Signature information 1402 is the information relating to the signature analyzing result of the first digital signature 1201. Similarly, a display frame 1403 denotes the range of the signature object of the second digital signature 1203 and signature information 1404 is information relating to the signature analyzing result of the second digital signature 903.

It can readily be confirmed from the relation of inclusion of the display frames 1401 and 1403 that the first digital signature 1201 is the signature for the field represented by the identifier "title" and the data including the second digital signature 1203.

As described above, according to the digital signature display apparatus of the present embodiment, it is possible to confirm what content is digitally signed by whom based upon the relationship of inclusion of the fields of the digital signature objects even if the data of the digital signature object is signed by a plurality of digital signatories.

A way of displaying the field of the signature object data in accordance with the present invention is not limited to the above-mentioned embodiments. For example, it may be displayed by displaying the changed color of the screen background in lieu of frame line in the embodiments.

The content of the display of the signature information in accordance with the present invention is not limited to the above-mentioned embodiments. For example, the information on the signatory and the signature verification result of the embodiment may be displayed.

The signature verification result may be displayed. The signature verification result may be separately displayed.

The method of digital signature in accordance with the present invention is not limited to the above-mentioned embodiments. The present invention is applicable to another method of digital signature including at least the signature object data and information specifying the information on the signatory.

In other words, the present invention may be embodied without departing from the gist that the content of the file including digitally signed data, the field of the digital signature object and the signature information is displayed in means for representing the digital signature.

Since the content of the file including the data of the digital signature object is displayed and the field of the digital signature object and the digital signature information is two-dimensionally superposed thereon in accordance with the present embodiment, it is possible to confirm the relationship among various digital signatures such as partial or multiple signatures without necessity of a number of operations.

In accordance with the present invention, it is possible to readily note the content of the data which is to be digitally signed.

## Claims

1. A digital signature verification apparatus inputting digital signature data including partial data digitally signed at least partly (101), comprising: means for inputting said digital signature data; means for detecting the range of said partial data based upon an identifier for identifying the range of said partial data included in said digital signature data (204); and means for displaying the content of said detected partial data (205).

2. An apparatus according to Claim 1, and further comprising means for detecting information (210) on the digital signature which is put on said input digital signature data, wherein said means for displaying (205) displays the information on the detected digital signature data (1001, 1002).

3. A computer program enabled to be stored in a recording medium,
wherein said computer program causes a computer to execute:
means for inputting digital signature data including partial data including at least a part having a digital signature (1301, 1302) partially put thereon;
means for detecting the range of said partial data based upon an identifier for identifying the range of said partial data being included in said digital signature data; and
means for displaying the content of said detected partial data (1403).

4. A computer program according to Claim 3, and further including: causing a computer to detect an information on the digital signature (210) being put on said input digital signature data,
wherein said means for displaying is a means for displaying the information on the detected digital signature data.

5. The invention according to any preceding claim,
wherein said information on said digital signature is concerned or connected with a subject putting said digital signature.

6. The invention according to any preceding claim,
wherein said means for displaying (205) displays the content of said partial data being associated with said digital signature (1001, 1002, 1103).

7. The invention according to any preceding claim,
wherein said means for displaying displays the information representing the content of said partial data in distinction with the other information (1001, 1103).

8. The invention according to any preceding claim,
wherein said digital signature is described in XML, and
said means for detecting points a predetermined data, retrieves an identifier prescribed in XML (901) and detects based upon said retrieved identifier (90, 501).

9. A digital signature data generating apparatus to put a digital signature upon electronic data, comprising:
a memory unit storing a program (202); and
a processing unit (201) connected to said memory unit which puts a digital signature upon the partial data included in said electronic data, generates an identifier to specify said partial data and generates digital signature data including the partial data having put thereon said digital signature and said identifier.

10. An apparatus according to Claim 9, further including:
a network connection unit (206) being connected to said processing unit (201), being connected to an information processing unit via a network, and transmitting the generated digital signature data to said information processing unit via the network.
